Europäisches Patentamt

European Patent Office

Office européen des brevets

(19)

(11) **EP 1 521 488 A1**

(12) **DEMANDE DE BREVET EUROPEEN**

(43) Date de publication:
**06.04.2005 Bulletin 2005/14**

(51) Int Cl.⁷: **H04Q 7/36**, H04B 7/005

(21) Numéro de dépôt: 03292443.3

(22) Date de dépôt: **02.10.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **FRANCE TELECOM**
**75015 Paris (FR)**

(72) Inventeurs:
• **Fourestie, Benoît**
**75014 Paris (FR)**

• **Ben Jamaa, Sana**
**75015 Paris (FR)**

(74) Mandataire: **Cabinet Martinet & Lapoux**
**43, Boulevard Vauban,**
**B.P. 405,**
**Guyancourt**
**78055 St. Quentin Yvelines Cedex (FR)**

(54) **Estimation de puissance de station de base dans un réseau de radiocommunication CDMA**

(57) Pour estimer les puissances totales émise et reçue d'une station de base donnée ($BTS_0$) dans un réseau CDMA en fonction notamment de la somme de puissances de canaux dédiés à des mobiles ($M_{i0}$) ayant des liens actifs avec la station donnée, on suppose que des puissances totales émises et reçues des stations de base voisines ($BTS_1$ à $BTS_B$) à la station donnée sont égales à celles de la station donnée. Des facteurs d'interférence interstation à intrastation et intrastation à interstation sont déterminés indépendamment des puissances totales émises et reçues des stations et seulement en dépendance d'affaiblissements entre des mobiles positionnés et les stations de base. Les puissances totales émises et reçues de la station de base donnée sont estimées notamment en fonction des facteurs d'interférence déterminés, ce qui évite de nombreuses itérations pour une précision donnée des puissances.

FIG. 3

EP 1 521 488 A1

**Description**

La présente invention concerne la planification et la simulation d'un réseau de radiocommunication cellulaire numérique.

Plus particulièrement elle a trait à l'estimation de la puissance d'une station de base pour un site donné de celle-ci dans un réseau de radiocommunication cellulaire numérique à accès multiple à répartition par codes CDMA (Coded Division Multiple Access). Par exemple, le réseau est à large bande du type FDD W-CDMA (Frequency Division Duplex Wideband-CDMA) selon la troisième génération (3GPP) de réseaux du type UMTS (Universal Mobile Telecommunications System).

La puissance d'interférence totale reçue par une station de base donnée dans une liaison montante (uplink) depuis des terminaux de radiocommunication mobiles, dits mobiles, peut être estimée, selon des procédés de simulation de réseau de type CDMA, par des itérations afin d'atteindre une convergence de calcul des puissances estimées. Par exemple, on pourra se reporter aux articles suivants pour des itérations successives jusqu'à la convergence des résultats des puissances :

"A Framework for Uplink Power Control in Cellular Radio Systems", Roy. D. Yates, IEEE Journal on Selected Areas in Communications, vol. 13, No. 7, p. 1341-1347, Septembre 1995 ; et
"Convergence Theorem for a Général Class of Power Control Algorithms", Kin Kwong Leung et al., IEEE International Conference on Communications, vol. 3, p. 811-815, Juin 2001.

Les estimations de puissance par itérations successives pour liaison descendante (downlink) présentent toutefois l'inconvénient d'être longues en raison du nombre élevé d'itérations nécessaires pour atteindre la convergence de la boucle de calcul de puissance. Ce procédé par itérations ne permet pas de tester un nombre suffisant de paramètres caractérisant les stations de base et les terminaux mobiles dans un temps raisonnable.

En outre, un tel procédé par itérations ne peut être appliqué correctement à l'estimation de la puissance totale émise par la station de base donnée lorsque l'un des mobiles fonctionne en macrodiversité, c'est-à-dire a des liens actifs simultanés avec plusieurs stations de base.

L'objectif de l'invention est de fournir un procédé d'estimation de puissance totale émise dans un réseau CDMA pour un positionnement des terminaux mobiles donné qui diminue considérablement le nombre d'itérations nécessaires à la détermination de la puissance totale pour une précision donnée afin par exemple de sélectionner rapidement le plus performant des sites disponibles d'une station de base au sens de la capacité du réseau pour une qualité de service donnée.

Pour atteindre cet objectif, un procédé pour estimer la puissance totale émise d'une station de base donnée dans un réseau de radiocommunication du type CDMA en fonction notamment de la somme de puissances de canaux dédiés à des mobiles positionnés ayant des liens actifs avec la station de base donnée, après une détermination préalable d'affaiblissements pour des liens actifs entre des mobiles positionnés et la station de base donnée et des liens actifs entre des mobiles positionnés et des stations de base voisines à la station de base donnée,
est caractérisé en ce qu'on suppose que des puissances totales émises des stations de base voisines sont égales à la puissance totale émise de la station de base donnée, on détermine des facteurs d'interférence interstation à intrastation indépendamment des puissances totales émises de la station de base donnée et des stations de base voisines et seulement en dépendance chacun d'un affaiblissement déterminé pour un lien actif entre un mobile positionné respectif et la station de base donnée et des affaiblissements prédéterminés entre le mobile positionné respectif et les stations de base voisines, et on estime la puissance totale émise de la station de base donnée notamment en fonction des facteurs d'interférence interstation à intrastation déterminés.

Selon la réalisation ci-dessus, l'estimation de puissance totale émise ne requiert avantageusement aucune itération.

Bien que les puissances totales émises des stations de base estimées chacune comme ci-dessus soient suffisamment proches des puissances à l'équilibre dans le réseau, dans certains cas on peut souhaiter affiner le résultat de l'estimation précédente en ajoutant au moins l'itération supplémentaire suivante. On estime les puissances totales émises des stations de base voisines en considérant chacune des stations de base voisines comme une station de base donnée, on détermine à nouveau les facteurs d'interférence interstation à intrastation en fonction également des puissances totales émises de la station de base donnée et des stations de base voisines estimées, et on estime à nouveau la puissance totale émise de la station de base donnée en fonction des facteurs d'interférence interstation à intrastation déterminés précédemment.

L'invention comporte une ou plusieurs estimations successives de la puissance totale émise de la station de base donnée pour une précision donnée, ce qui évite de très nombreuses itérations ou un calcul matriciel complexe et ainsi réduit notablement la durée d'estimation. Le nombre d'itérations selon l'invention est d'autant plus faible que la précision demandée sur le puissance totale émise est faible et est nettement inférieure à celui selon la technique antérieure pour une précision donnée.

Lorsqu'un mobile fonctionne en macrodiversité, le rapport signal à interférence pour un lien descendant vers ce mobile dont dépend la puissance totale émise de la station de base donnée, peut être remplacé par la somme de rapports signal à interférence déterminés pour tous les liens descendants actifs vers le mobile fonctionnant en macrodiversité, chaque rapport signal à interférence déterminé dépendant de sommes de rapports d'affaiblissements relatifs aux liens descendants actifs vers le mobile fonctionnant en macrodiversité.

L'invention concerne également l'estimation de la puissance d'interférence totale reçue de la station de base donnée notamment en fonction de la somme de puissances d'interférence reçues des canaux dédiés aux mobiles positionnés ayant des liens actifs avec la station de base donnée. Pour cette estimation, on suppose que des puissances d'interférence totales reçues des stations de base voisines sont égales à la puissance d'interférence totale reçue de la station de base donnée à une puissance de bruit pour lien actif près, on détermine des facteurs d'interférence intrastation à interstation indépendamment des puissances d'interférence totales reçues de la station de base donnée et des stations de base voisines et seulement en dépendance chacun des affaiblissements déterminés précédemment pour les liens actifs entre les mobiles positionnés et la station de base donnée et les liens actifs entre les mobiles positionnés et les stations de base voisines et d'un affaiblissement déterminé précédemment pour un lien actif entre un mobile positionné respectif et la station de base donnée, et on estime la puissance d'interférence totale reçue de la station de base donnée notamment en fonction des facteurs d'interférence intrastation à interstation déterminés.

Si, dans certains cas, on souhaite affiner le résultat de l'estimation précédente de puissance d'interférence totale reçue, on ajoute au moins l'itération supplémentaire suivante qui consiste à estimer les puissances d'interférence totales reçues des stations de base voisines en considérant chacune des stations de base voisines comme une station de base donnée, déterminer à nouveau les facteurs d'interférence intrastation à interstation en fonction également des puissances totales émises de la station de base donnée et des stations de base voisines estimées, et estimer à nouveau la puissance d'interférence totale reçue de la station de base donnée en fonction des facteurs d'interférence intrastation à interstation déterminés précédemment.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :

- la figure 1 montre schématiquement le voisinage d'une station de base donnée dans un réseau de radiocommunication W-CDMA ;
- la figure 2 est un algorithme d'étapes principales du procédé d'estimation de puissance selon l'invention ; et
- la figure 3 un algorithme d'une étape d'estimation de puissance à deux itérations selon l'invention.

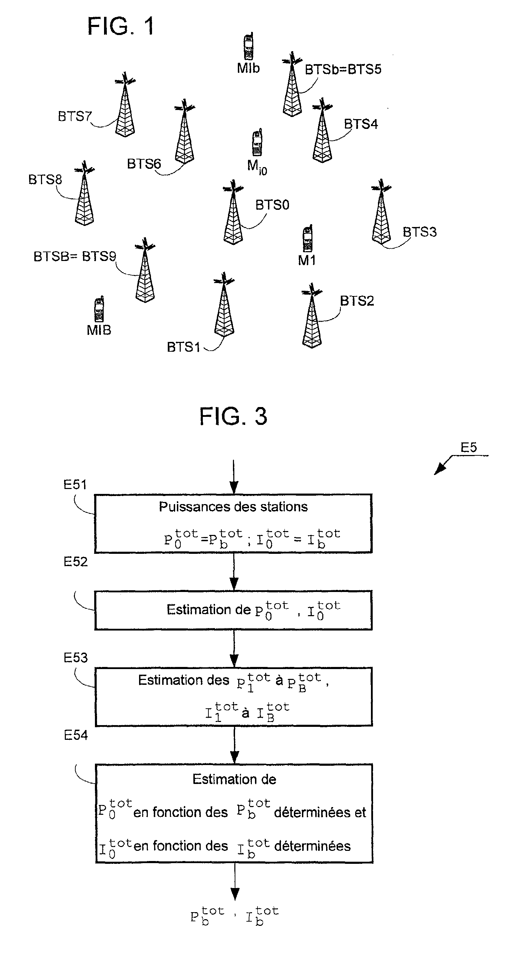

En référence à la figure 1, une station de base donnée $BTS_0$ (Node B selon le vocabulaire UMTS) dans un réseau de radiocommunication cellulaire numérique à large bande du type W-CDMA est entourée de B stations de base voisines $BTS_b$ avec l'indice b tel que $b \in \{1, B\}$. Une station de base $BTS_b$ est dite voisine de la station de base donnée $BTS_0$ associée à l'indice b=0 lorsque la station voisine $BTS_b$ est située dans un rayon prédéterminé autour de la station donnée et la station donnée reçoit une puissance d'interférence d'un terminal de radiocommunication mobile situé à la station $BTS_b$ telle que le rapport signal à interférence SIR (Signal-to-Interference Ratio) dans la station donnée est supérieur à un rapport signal à interférence minimal. Le nombre B de stations voisines varie ainsi d'une station à l'autre en dépendance de la topographie du terrain avoisinant la station donnée.

Dans la station de base donnée, on définit la charge pour les liens descendants DL (DownLink) de la manière suivante :

$$C_{DL} = P_0^{tot}/P_0^{Max}$$

où $P_0^{tot}$ dénote la puissance totale émise par la station de base donnée $BTS_0$ et $P_0^{Max}$ dénote la puissance totale émise maximale de la station $BTS_0$. Pour les liens montants UL (UpLink) vers la station de base donnée, la charge s'écrit :

$$C_{UL} = I_0^{tot} / (I_0^{tot} + N_0)$$

où $I_0^{tot}$ est la puissance d'interférence totale reçue par la station de base $BTS_0$ et $N_0$ dénote la puissance de bruit thermique dans les liens.

L'invention cherche à estimer la puissance totale émise $P_0^{tot}$ et la puissance d'interférence totale reçue $I_0^{tot}$ de la station de base donnée $BTS_0$ pour quelques sites disponibles de celle-ci dans un environnement prédéterminé. Chaque station de base $BTS_b$ avec $b \in \{0, B\}$ est en communication avec des terminaux de radiocommunication mobiles respectifs $M_{ib}$, dits mobiles, avec l'indice ib tel que ib $\in$ {1, Ib}, les entiers I0 à IB associés aux stations $BTS_0$ à $BTS_B$ étant a priori différents.

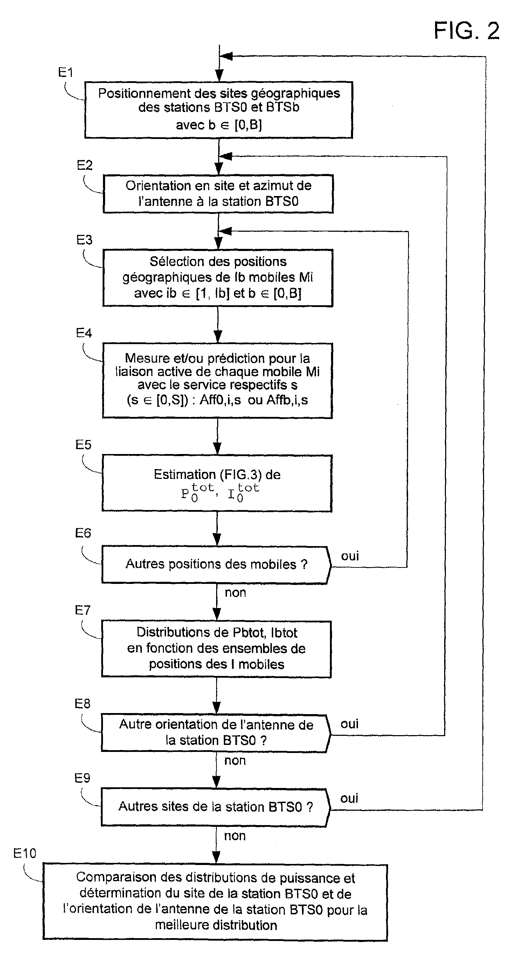

Comme montré à la figure 2, le procédé d'estimation de puissance selon l'invention est mis en oeuvre sous la forme d'un logiciel implémenté dans un ordinateur et comprend principalement des étapes E1 à E10.

L'ordinateur contient ou peut accéder à une base de données dans laquelle des données géographiques et de puissance ont été saisies notamment à des étapes préalables E1 à E4. A l'étape E1, les coordonnées géographiques du site de chacune des stations de base $BTS_0$ à $BTS_B$ telles que la longitude, la latitude et l'altitude du site, sont enregistrées en positionnant avec la souris de l'ordinateur le site sur une carte affichée, préalablement numérisée et maillée et enregistrée dans l'ordinateur. Le site et l'azimut d'une antenne d'émission/réception de la station de base donnée $BTS_0$ ainsi qu'en variante l'altitude de l'antenne sont sélectionnés à l'étape E2 ; d'autres caractéristiques de la station donnée sont également enregistrées, comme celles du diagramme de rayonnement de l'antenne. Les mobiles $M_{1b}$ à $M_{Ib}$ en communication avec chaque station $BTS_b$ sont également positionnés sur la carte affichée et les coordonnées géographiques de leurs positions sélectionnées sont également enregistrées à l'étape E3.

A l'étape E4, des liens actifs entre les mobiles et les stations de base sont définis ; un mobile ne communique qu'avec qu'une seule station de base à la fois et ainsi n'admet qu'un lien actif, alors qu'une station de base peut communiquer simultanément avec plusieurs mobiles et ainsi admet plusieurs liens actifs. Un affaiblissement $Aff_{b,ib}$ pour un lien actif entre un mobile positionné $M_{ib}$ avec l'une $BTS_b$ des stations de base $BTS_0$ à $BTS_B$ est déterminé comme étant le rapport d'une puissance émise prédéterminée par ladite une station de base $BTS_b$ fonctionnant seule en émetteur, sur la puissance de champ radioélectrique reçu à la position du mobile $M_{ib}$ par exemple, par mesure réelle sur le terrain, ou par prédiction selon un modèle de propagation connu, préalablement enregistré dans l'ordinateur. Les affaiblissements dépendent de la topographie au voisinage de la station de base donnée $BTS_0$ et des positionnements de celle-ci et des stations de base voisines décidés à l'étape E1.

Dans un réseau W-CDMA, plusieurs services tels que la téléphonie (voix), la vidéophonie, la transmission d'images fixes, de messages courts SMS ou de messages multimédias MMS, sont offerts avec des débits différents. S services sont ainsi prédéterminés avec un indice s désignant l'un de ces services tel que s $\in$ {1, S}. Les affaiblissements $Aff_{b,ib}$ pour les liens actifs entre les mobiles positionnés et les stations de base sont indépendants des services.

Pour chaque service sont préalablement estimés des rapports signal à interférence cibles $\gamma_S^{DL}$ et $\gamma_S^{UL}$ respectivement pour un lien descendant DL depuis une station de base vers un mobile et un lien montant UL depuis un mobile vers une station de base. Le rapport signal à interférence cible $\gamma_S^{DL}$ est une limite inférieure en deçà de laquelle un mobile ne reçoit plus une puissance suffisante d'une station pour traiter convenablement un signal émis par la station. Le rapport signal à interférence cible $\gamma_S^{UL}$ est une limite inférieure en deçà de laquelle une station ne reçoit plus une puissance suffisante d'un mobile pour traiter convenablement un signal émis par le mobile. Ces rapports cibles interviennent dans des commandes de puissance dans les mobiles et les stations.

En pratique, les étapes E2, E3 et E4 de sélection d'orientations d'antenne, des positions des mobiles, des liens actifs et des services pour les liens actifs sont itératives comme on le verra à de prochaines étapes E6 et E8. Les affaiblissements $Aff_{b,ib}$ sont de préférence préalablement évalués et enregistrés dans la base de données pour tous les liens possibles entre les diverses positions de mobiles et toutes les stations de base $BTS_0$ à $BTS_B$ afin de simuler de nombreuses configurations du réseau WCDMA au voisinage de la station de base donnée dont les sites disponibles sont à étudier.

Le cas échéant après l'étape E4, des stations de base pour lesquelles tous les affaiblissements évalués en relation avec tous les mobiles positionnés excèdent un seuil d'affaiblissement prédéterminé élevé sont éliminées en tant que stations voisines pour l'estimation de puissance à l'étape suivante E5.

La puissance totale $P_0^{tot}$ émise par la station de base donnée $BTS_0$ représentative de la capacité d'une **liaison descendante** DL réunissant les liens descendants sélectionnés à l'étape E4 et relatifs aux mobiles $M_{i0}$ tels que i0 $\in$ {1, I0}, est estimée, selon l'invention, en supposant que les puissances émises totales $P_1^{tot}$ à $P_B^{tot}$ des stations de base voisines sont égales a priori à $P_0^{tot}$. Cela revient à considérer que la charge du réseau est localement uniforme. Cette hypothèse réduit le nombre d'inconnues de puissance dans l'estimation de la puissance émise de la station de base donnée à rechercher, ce qui permet d'obtenir une formulation analytique de la puissance émise estimée de la station de base donnée.

La puissance totale émise $P_0^{tot}$ de la station de base donnée $BTS_0$ est déterminée à partir de la somme de la puissance $P_{CCH}$ des canaux physiques communs à l'émission dans la station de base donnée, à l'exception du canal de synchronisation, et de la puissance $P_{SCH}$ du canal de synchronisation à l'émission dans la station de base donnée, et de la somme des puissances des canaux dédiés aux mobiles ayant des liens actifs avec la station de base donnée $BTS_0$ et dépendant linéairement de facteurs d'orthogonalité $\alpha_s$ pour les codes des services pour liaison descendante tel que $\alpha_s \in [0,1]$, et d'une densité spectrale de bruit $N_0$ dans un lien actif. On notera que les puissances des canaux physiques communs des stations de base $BTS_0$ à $BTS_B$ sont a priori différents et les puissances des canaux de synchronisation des stations de base $BTS_0$ à $BTS_B$ sont a priori différents malgré l'hypothèse d'égalité des puissances totales émises $P_0^{tot}$ à $P_B^{tot}$ de toutes les stations de base.

Selon l'invention, la puissance totale émise $P_0^{tot}$ de la station de base donnée $BTS_0$ est estimée selon la formule suivante:

$$P_0^{tot} \approx \frac{P_{CCH} + P_{SCH} + \sum\limits_{s \in \{1,S\}} \beta_s \sum\limits_{i0 \in \{1,IO\}} \left( (1 - \alpha_s) P_{SCH} + N_0 Aff_{0,i0} \right)}{1 - \sum\limits_{s \in \{1,S\}} \beta_s \sum\limits_{i0 \in \{1,IO\}} (F_{i0} + \alpha_s)} \ .$$

Dans la formule précédente, la puissance totale émise $P_0^{tot}$ dépend du paramètre suivant

$$\beta_S = \frac{\gamma_S^{DL}}{1 + \alpha_S \gamma_S^{DL}}$$

fonction du rapport signal à interférence cible $\gamma_S^{DL}$ pour un lien descendant DL avec le service s, et d'un facteur d'interférence interstation à intrastation $F_{i0}$ égal au rapport de la somme des interférences des stations voisines à l'interférence de la station de base $BTS_0$ pour un mobile positionné respectif $M_{i0}$ :

$$F_{i0} = Aff_{0,i0} \left( \sum\limits_{b \in (1,B)} 1 / Aff_{b,i0} \right) .$$

Le facteur $F_{i0}$ exprime l'interférence d'un lien actif entre le mobile positionné respectif $M_{i0}$ et la station de base donnée $BTS_0$, avec tous les liens entre le mobile positionné respectif $M_{i0}$ et les stations de base voisines $BTS_1$ à $BTS_B$.
Sans l'hypothèse d'uniformité locale des puissances totales émises par les stations voisines, le facteur $F_{i0}$ dépend des puissances totales émises $P_0^{tot}$ à $P_B^{tot}$ des stations de base comme suit :

$$F_{i0} = \frac{Aff_{0,i0}}{P_O^{tot}} \left( \sum\limits_{b \in (1,B)} P_b^{tot} / Aff_{b,i0} \right) .$$

Les puissances $P_1^{tot}$ à $P_B^{tot}$ étant inconnues, l'hypothèse d'uniformité simplifie, selon l'invention, l'expression de $F_{i0}$.
Comme montré à la figure 3 selon une variante plus précise, l'étape E5 comprend, après l'hypothèse E51 d'uniformité locale des puissances totales émises et l'estimation E52 de la puissance totale émise $P_0^{tot}$ de la station de base donnée, une estimation des puissances totales émises $P_1^{tot}$ à PBtot des stations de base voisines $BTS_1$ à $BTS_B$ au moyen de formules analogues à la précédente, en considérant chacune des stations de base voisines comme une station de base donnée, à une étape E53. Puis l'hypothèse d'uniformité locale des puissances émises par les stations de base voisines est abandonnée à une étape E54 afin d'introduire explicitement les puissances $P_1^{tot}$ à $P_B^{tot}$

qui viennent d'être estimées dans la détermination des facteurs d'interférence interstation à intrastation $F_{i0}$ avec i0 $\in$ {1, I0} qui s'écrivent selon la formule suivante :

$$F_{i0} = \frac{Aff_{0,i0}}{P_0^{tot}} \left( \sum_{b \in (1,B)} P_b^{tot} / Aff_{b,i0} \right).$$

La puissance totale émise de la station de base donnée $BTS_0$ est de nouveau estimée selon la formule précédente en introduisant les facteurs $F_{i0}$ avec i0 $\in$ {1, I0} en fonction des puissances totales émises de la station de base donnée et des stations de base voisines estimées précédemment afin d'affiner l'estimation de la puissance totale émise de la station de base donnée. Si d'autres itérations sont effectuées chacune en introduisant les valeurs des puissances totales émises précédemment estimées des stations de base dans les facteurs d'interférence, puis ces facteurs dans les formules des puissances totales émises des stations de base voisines, et en déterminant à nouveau les facteurs $F_{i0}$ avec i0 $\in$ {1,IO} de la station de base donnée et la puissance totale émise de celle-ci, il apparaît que ces itérations sont inutiles puisque la valeur de la puissance totale émise n'est quasiment plus modifiée.

Par conséquent, grâce à l'hypothèse de l'uniformité des puissances totales émises par les stations voisines égales à celle de la station donnée, la convergence est très rapidement obtenue par une seule estimation, ou éventuellement par plusieurs estimations de la puissance totale émise pour une plus grande précision ce qui diminue considérablement la durée d'estimation pour une précision donnée.

En fonction des puissances totales émises déterminées pour la station de base donnée et les stations de base voisines, les puissances émises des canaux dédiés de trafic dans les liens actifs des mobiles sont déterminées selon la formule suivante pour un mobile $M_{io}$ en liaison avec la station de base $BTS_0$ pour un service s :

$$P_{TCH,i0,s}^0 = \beta_s \left[ (1 - \alpha_s)P_{SCH} + (\alpha_s + F_{i0})P_0^{tot} + N_0 Aff_{0,i0} \right].$$

En variante, les facteurs d'orthogonalité $\alpha_s$ pour les services sont égaux à une constante.

Selon une autre réalisation de l'invention, un mobile fonctionne en **macrodiversité** selon la norme UMTS. En macrodiversité, le mobile établit et maintient plusieurs liens radio avec plusieurs stations de base simultanément. La formule précédente relative à la puissance totale émise $P_0^{tot}$ de la station de base donnée $BTS_0$ est alors corrigée, en supposant que le mobile fonctionnant en macrodiversité combine les signaux reçus, comme un récepteur en rateau (rake) selon un principe de combinaison de rapport maximal MRC (Maximum Ratio Combining), en remplaçant le rapport signal à interférence pour la liaison descendante du mobile fonctionnant en macrodiversité et avec le service s par :

$$\bar{\gamma}_s^{DL} = \sum_{l \in (1,L)} \xi_{s,l}^{DL}.$$

Dans les formules précédentes, $\xi_{s,1}^{DL}$ désigne le rapport signal à interférence cible pour l'un 1 des L liens descendants actifs vers le mobile fonctionnant en macrodiversité, en considérant le mobile équivalent à L "mobiles" chacun avec un lien unique avec une station respective $BTS_1$, avec 1 $\in$ (1,L). Cette dernière formulation signifie que la somme des rapports signal à interférence atteints par les multiples liens actifs doit être égale au rapport signal à interférence $\gamma_s^{DL}$ du service s pour macrodiversité.

Cette formulation permet encore d'estimer séparément les puissances totales reçues pour chacune des stations de base $BTS_0$ à $BTS_B$. Tout se passe comme si le mobile fonctionnant en macrodiversité était divisé en autant de mobiles qu'il a de liens actifs avec des stations de base.

En utilisant les hypothèses qui précédent, on montre que le rapport signal à interférence SIR modifié pour le premier lien 1=1 du mobile fonctionnant en macrodiversité relativement à la station $BTS_1$ = $BTS_1$, avec 1 $\leq$ L s'écrit :

$$\xi_{s,1}^{DL} = \frac{\gamma_s^{DL}}{\alpha_s + \sum\limits_{\substack{l\in\{1,L\}\\l\neq1}} \frac{Aff_{l,i1}}{Aff_{l,i1}}} \Bigg/ \left( \frac{1}{\alpha_s + \sum\limits_{\substack{l\in\{1,L\}\\l\neq1}} \frac{Aff_{l,i1}}{Aff_{l,i1}}} + \ldots + \frac{1}{\alpha_s + \sum\limits_{\substack{l\in\{1,L\}\\l\neq L}} \frac{Aff_{l,iL}}{Aff_{l,i1}}} \right).$$

Les autres rapports signal à interférence pour 1=2 à 1=L sont modifiés en permutant les indices.

Cette formulation ne dépend que des rapports des affaiblissements pour les liens actifs. Ces affaiblissements étant connus, le rapport signal à interférence $\gamma_s^{DL}$ pour liens descendants relatifs au service s et au mobile fonctionnant en macrodiversité est déterminé directement ce qui évite toute itération.

Pour la **liaison montante** UL vers la station de base donnée $BTS_0$ réunissant les liens montants sélectionnés à l'étape E4 avec les mobiles $M_{i0}$ tels que i0 $\in$ {1, I0}, la puissance d'interférence totale reçue $I_0^{tot}$ par la station de base donnée $BTS_0$ est estimée en supposant, d'une manière analogue à l'hypothèse pour la liaison descendante DL, que les puissances d'interférence totales reçues $I_1^{tot}$ à $I_B^{tot}$ par les stations de base voisines $BTS_1$ à $BTS_B$ sont égales a priori à la puissance $I_0^{tot}$, à la puissance de bruit $N_0$ pour lien actif près. Ceci revient à considérer une uniformité des interférences totales reçues dans le réseau et réduit le nombre d'inconnues d'interférence à une seule.

La puissance d'interférence totale reçue $I_0^{tot}$ par la station $BTS_0$ est estimée à partir des puissances émises par les mobiles à travers les liens actifs en respectant la condition selon laquelle le rapport de la puissance émise par un mobile pour un service s sur la puissance d'interférence totale reçue $I_0^{tot}$ par la station donnée $BTS_0$ doit être supérieure au rapport du signal à interférence cible $\gamma_s^{UL}$ dans un lien montant pour le service s, et en sommant toutes les puissances reçues provenant des mobiles ayant des liens actifs avec la station de base donnée $BTS_0$ et interférant avec les liens actifs des stations de base voisines $BTS_1$ à $BTS_B$ et donc dépendant linéairement des affaiblissements dans ces liens actifs.

Selon l'invention, la puissance d'interférence totale reçue $I_0^{tot}$ de la station de base donnée BTS0 est estimée par la formule suivante :

$$I_0^{tot} = \frac{\left( \sum\limits_{s\in\{1,S\}} \frac{\gamma_s^{UL}}{1+\gamma_s^{UL}} \sum\limits_{\substack{ib\in\{1,Ib\}\\b\in(0,B)}} \frac{Aff_{b,ib}}{Aff_{0,i0}} \right) N_0}{1 - \sum\limits_{s\in\{1,S\}} \frac{\gamma_s^{UL}}{1+\gamma_s^{UL}} \sum\limits_{\substack{ib\in\{1,Ib\}\\b\in(0,B)}} \frac{Aff_{b,ib}}{Aff_{0,i0}}}.$$

On notera que l'hypothèse d'une uniformité des puissances d'interférence n'est utilisée que dans le facteur d'interférence intrastation à interstation suivant des rapports d'affaiblissement relatifs à tous les liens actifs entre des mobiles positionnés $M_{ib}$ et toutes les stations de base $BTS_0$ à $BTS_B$ et à un affaiblissement relatif à un lien actif entre un moobile positionné respectif $M_{i0}$ et la station de base donnée $BTS_0$ :

$$F_{i0}^{UL} = \frac{1}{Aff_{0,i0}} \sum\limits_{\substack{ib\in\{1,Ib\}\\b\in(0,B)}} Aff_{b,ib}.$$

Sans l'hypothèse d'uniformité locale des puissances d'interférence totales reçues par les stations voisines, le facteur précédent $F_{i0}^{UL}$ dépend des puissances d'interférence totales reçues $I_0^{tot}$ à $I_B^{tot}$ des stations de base comme suit :

$$F_{i0}^{UL} = \frac{1}{Aff_{0,ib}(I_0^{tot} + N_0)} \sum_{\substack{ib \in \{1, Ib\} \\ b \in (0, B)}} Aff_{b,ib}\left(I_b^{tot} + N_0\right).$$

Les puissances d'interférence $I_0^{tot}$ à $I_B^{tot}$ étant inconnues, l'hypothèse d'uniformité simplifie, selon l'invention, l'expression du facteur $F_{i0}^{UL}$.

Comme montré également à la figure 3 selon la variante plus précise, l'étape E5 comprend, après l'hypothèse E51 d'uniformité locale des puissances d'interférence totales reçues et l'estimation E52 de la puissance d'interférence totale reçue $I_0^{tot}$ de la station de base donnée, une estimation des puissances d'interférence totales reçues $I_1^{tot}$ à $I_B^{tot}$ des stations de base voisines au moyen de formules analogues à la précédente, en considérant chacune des stations de base voisines comme une station de base donnée, à l'étape E53. Puis l'hypothèse d'uniformité locale des puissances reçues par les stations de base voisines est abandonnée à l'étape E54 afin d'introduire explicitement les puissances $I_0^{tot}$ à $I_B^{tot}$ qui viennent d'être estimées dans la détermination des facteurs $F_{i0}^{UL}$ avec i0 $\in$ {1, I0} qui s'écrivent selon la formule suivante :

$$F_{i0}^{UL} = \frac{1}{Aff_{0,i0}(I_0^{tot} + N_0)} \sum_{\substack{ib \in \{1, Ib\} \\ b \in (0, B)}} Aff_{b,ib}\left(I_b^{tot} + N_0\right).$$

La puissance d'interférence totale reçue de la station de base donnée $BTS_0$ est de nouveau estimée selon la formule précédente en introduisant les facteurs $F_{i0}^{UL}$ avec i0 $\in$ {1, I0} en fonction des puissances d'interférence totales reçues de la station de base donnée et des stations de base voisines estimées précédemment afin d'affiner l'estimation de la puissance d'interférence totale émise de la station de base donnée. Si d'autres itérations sont effectuées chacune en introduisant les valeurs des puissances d'interférence reçues précédemment estimées des stations de base dans les facteurs d'interférence pour liens montants, puis ces facteurs dans les formules des puissances d'interférence totales reçues des stations de base voisines, et en déterminant à nouveau les facteurs $F_{i0}^{UL}$ de la station de base donnée et la puissance d'interférence totale reçue de celle-ci, il apparaît que ces itérations sont inutiles puisque la valeur de la puissance d'interférence totale reçue n'est quasiment plus modifiée, ce qui conduit aux mêmes conséquences que pour la puissance totale émise en terme de rapidité de convergence et d'estimation.

Après l'estimation de la puissance totale émise et la puissance d'interférence totale reçue de la station de base donnée $BTS_0$, d'autres valeurs de puissance $P_0^{tot}$ et $I_0^{tot}$ sont estimées pour d'autres services et d'autres positions des mobiles à l'étape E6 afin de présenter des graphes de distribution des puissances émise et reçue en fonction d'ensembles de positions des mobiles et d'ensembles de services à l'étape E7.

Des estimations analogues sont ensuite effectuées pour différentes orientations en site et azimut de l'antenne de la station de base donnée $BTS_0$, à l'étape E8. Puis le cas échéant, les estimations précédentes sont réitérées pour d'autres sites disponibles de la station de base donnée $BTS_0$ à l'étape E9.

Finalement à l'étape E10, les distributions de puissance totale émise et de puissance d'interférence totale reçue élaborées à des étapes E7 sont comparées et analysées afin de sélectionner le site de la station de base donnée $BTS_0$ avec l'orientation d'antenne de cette station la plus favorable parmi des sites proposés.

Au cours de l'évolution du réseau, l'invention peut être à nouveau sollicitée pour estimer à nouveau les puissances totales émises et reçues des stations de base notamment en fonction de l'accroissement du trafic.

Plusieurs estimations successives peuvent être également réalisées sur des tirages de positions de mobile corrélées, permettant de suivre l'évolution du réseau en fonction du déplacement des mobiles et de leurs connexions et déconnexions.

**Revendications**

1. Procédé pour estimer la puissance totale émise d'une station de base donnée ($BTS_0$) dans un réseau de radiocommunication du type CDMA en fonction notamment de la somme de puissances de canaux dédiés à des mobiles positionnés ($M_{i0}$) ayant des liens actifs avec la station de base donnée, après une détermination préalable (E4) d'affaiblissements pour des liens actifs entre des mobiles positionnés et la station de base donnée et des liens actifs entre des mobiles positionnés et des stations de base voisines à la station de base donnée, **caractérisé en ce qu'**on suppose (E51) que des puissances totales émises des stations de base voisines ($BTS_1$ à $BTS_B$) sont égales à la puissance totale émise de la station de base donnée ($BTS_0$), on détermine (E52) des facteurs d'interférence interstation à intrastation indépendamment des puissances totales émises de la station de base donnée et des stations de base voisines et seulement en dépendance chacun d'un affaiblissement déterminé pour un lien actif entre un mobile positionné respectif et la station de base donnée et des affaiblissements prédéterminés entre le mobile positionné respectif et les stations de base voisines, et on estime (E54) la puissance totale émise de la station de base donnée notamment en fonction des facteurs d'interférence interstation à intrastation déterminés.

2. Procédé conforme à la revendication 1, **caractérisé en ce qu'**on estime (E53) les puissances totales émises des stations de base voisines ($BTS_1$ à $BTS_B$) en considérant chacune des stations de base voisines comme une station de base donnée, on détermine à nouveau les facteurs d'interférence interstation à intrastation en fonction également des puissances totales émises de la station de base donnée et des stations de base voisines estimées, et on estime à nouveau la puissance totale émise de la station de base donnée en fonction des facteurs d'interférence interstation à intrastation déterminés précédemment.

3. Procédé conforme à la revendication 1 ou 2, **caractérisé en ce que**, lorsqu'un mobile fonctionne en macrodiversité, le rapport signal à interférence pour un lien descendant vers ce mobile dont dépend la puissance totale émise de la station de base donnée, est remplacé par la somme de rapports signal à interférence déterminés pour tous les liens descendants actifs vers le mobile fonctionnant en macrodiversité, chaque rapport signal à interférence déterminé dépendant de sommes de rapports d'affaiblissements relatifs aux liens descendants actifs vers le mobile fonctionnant en macrodiversité.

4. Procédé conforme à l'une quelconque des revendications 1 à 3, **caractérisé en ce que**, pour estimer la puissance d'interférence totale reçue de la station de base donnée ($BTS_0$) notamment en fonction de la somme de puissances d'interférence reçues des canaux dédiés aux mobiles positionnés (Mi) ayant des liens actifs avec la station de base donnée, on suppose (E51) que des puissances d'interférence totales reçues des stations de base voisines ($BTS_1$ à $BTS_B$) sont égales à la puissance d'interférence totale reçue de la station de base donnée ($BTS_0$) à une puissance de bruit pour lien actif près, on détermine (E52) des facteurs d'interférence intrastation à interstation indépendamment des puissances d'interférence totales reçues de la station de base donnée et des stations de base voisines et seulement en dépendance chacun des affaiblissements déterminés précédemment pour les liens actifs entre les mobiles positionnés et la station de base donnée ($BTS_0$) et les liens actifs entre les mobiles positionnés et les stations de base voisines ($BTS_1$ à $BTS_B$) et d'un affaiblissement déterminé précédemment pour un lien actif entre un mobile positionné respectif et la station de base donnée, et on estime (E54) la puissance d'interférence totale reçue de la station de base donnée notamment en fonction des facteurs d'interférence interstation à intrastation déterminés.

5. Procédé conforme à la revendication 4, **caractérisé en ce qu'**on estime (E53) les puissances d'interférence totales reçues des stations de base voisines ($BTS_1$ à $BTS_B$) en considérant chacune des stations de base voisines comme une station de base donnée, on détermine à nouveau les facteurs d'interférence intrastation à interstation en fonction également des puissances totales émises de la station de base donnée et des stations de base voisines estimées, et on estime à nouveau la puissance d'interférence totale reçue de la station de base donnée en fonction des facteurs d'interférence intrastation à interstation déterminés précédemment.

# FIG. 1

BTSb=BTS5

MIb

BTS7

BTS4

BTS6

$M_{i0}$

BTS8

BTS0

BTS3

BTSB= BTS9

M1

MIB

BTS2

BTS1

# FIG. 3

E5

E51

Puissances des stations

$$P_0^{tot} = P_b^{tot} \; ; \; I_0^{tot} = I_b^{tot}$$

E52

Estimation de $P_0^{tot}$ , $I_0^{tot}$

E53

Estimation des $P_1^{tot}$ à $P_B^{tot}$ ,

$I_1^{tot}$ à $I_B^{tot}$

E54

Estimation de

$P_0^{tot}$ en fonction des $P_b^{tot}$ déterminées et

$I_0^{tot}$ en fonction des $I_b^{tot}$ déterminées

$P_b^{tot}$ , $I_b^{tot}$

FIG. 2

E1 — Positionnement des sites géographiques
des stations BTS0 et BTSb
avec b ∈ [0,B]

E2 — Orientation en site et azimut de
l'antenne à la station BTS0

E3 — Sélection des positions
géographiques de Ib mobiles Mi
avec ib ∈ [1, Ib] et b ∈ [0,B]

E4 — Mesure et/ou prédiction pour la
liaison active de chaque mobile Mi
avec le service respectifs s
(s ∈ [0,S]) : Aff0,i,s  ou Affb,i,s

E5 — Estimation (FIG.3) de
$P_0^{tot}, I_0^{tot}$

E6 — Autres positions des mobiles ?      oui

non

E7 — Distributions de Pbtot, Ibtot
en fonction des ensembles de
positions des I mobiles

E8 — Autre orientation de l'antenne de
la station BTS0 ?      oui

non

E9 — Autres sites de la station BTS0 ?      oui

non

E10 — Comparaison des distributions de puissance et
détermination du site de la station BTS0 et de
l'orientation de l'antenne de la station BTS0 pour la
meilleure distribution

**Office européen des brevets**

**RAPPORT DE RECHERCHE EUROPEENNE**

Numéro de la demande

EP 03 29 2443

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 1 335 616 A (KONINKL KPN NV) 13 août 2003 (2003-08-13) * abrégé * * page 2, ligne 5 - page 3, ligne 37 * * page 4, ligne 10 - page 9, ligne 25 * --- | 1-5 | H04Q7/36 H04B7/005 |
| Y | US 2002/155854 A1 (VANGHI VIERI) 24 octobre 2002 (2002-10-24) * abrégé * * page 1, colonne de droite, ligne 13 - page 2, colonne de droite, ligne 22 * * page 3, colonne de droite, ligne 1 - page 5, colonne de droite, ligne 61 * * revendications 1,6 * --- | 1-5 | |
| A | WACKER A ET AL: "Static simulator for studying WCDMA radio network planning issues" VEHICULAR TECHNOLOGY CONFERENCE, 1999 IEEE 49TH HOUSTON, TX, USA 16-20 MAY 1999, PISCATAWAY, NJ, USA,IEEE, US, 16 mai 1999 (1999-05-16), pages 2436-2440, XP010342261 ISBN: 0-7803-5565-2 * abrégé * * page 2436, colonne de droite, ligne 6 - page 2438, colonne de gauche, ligne 45 * --- | 1-5 | |
| A | EP 1 292 162 A (KONINKL KPN NV) 12 mars 2003 (2003-03-12) * abrégé * * page 2, ligne 56 - page 3, ligne 48 * * page 4, ligne 20 - ligne 33 * * page 5, ligne 29 - page 8, ligne 7 * --- -/-- | 1-5 | |

DOMAINES TECHNIQUES RECHERCHES (Int.Cl.7)

H04Q
H04B

Le présent rapport a été établi pour toutes les revendications

| Lieu de la recherche | Date d'achèvement de la recherche | Examinateur |
|---|---|---|
| MUNICH | 18 mars 2004 | Biyee, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**Office européen des brevets**

**RAPPORT DE RECHERCHE EUROPEENNE**

Numéro de la demande

EP 03 29 2443

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 111 857 A (REYNOLDS SHEILA M ET AL) 29 août 2000 (2000-08-29) <br> * abrégé * <br> * colonne 7, ligne 12 - colonne 10, ligne 59 * <br> * colonne 11, ligne 17 - colonne 22, ligne 45 * <br> --- | 1-5 | |
| A | TANAKA M ET AL: "Fast initial acquisition of transmitter power for the reverse link DS/CDMA cellular systems" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18 mai 1998 (1998-05-18), pages 2436-2440, XP010288112 ISBN: 0-7803-4320-4 <br> * abrégé * <br> * page 2436, colonne de droite, ligne 1 - page 2438, colonne de gauche, ligne 2 * <br> ----- | 4,5 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| MUNICH | 18 mars 2004 | Biyee, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 2443

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-03-2004

| Document brevet cité au rapport de recherche | | Date de publication | Membre(s) de la famille de brevet(s) | | Date de publication |
|---|---|---|---|---|---|
| EP 1335616 | A | 13-08-2003 | EP | 1335616 A2 | 13-08-2003 |
| | | | JP | 2003274447 A | 26-09-2003 |
| | | | US | 2003148782 A1 | 07-08-2003 |
| US 2002155854 | A1 | 24-10-2002 | US | 6393276 B1 | 21-05-2002 |
| | | | WO | 03096570 A1 | 20-11-2003 |
| | | | AU | 3727601 A | 24-07-2001 |
| | | | CN | 1416623 T | 07-05-2003 |
| | | | WO | 0152425 A2 | 19-07-2001 |
| | | | JP | 2003520485 T | 02-07-2003 |
| | | | US | 2002187801 A1 | 12-12-2002 |
| EP 1292162 | A | 12-03-2003 | EP | 1292162 A1 | 12-03-2003 |
| | | | EP | 1294208 A1 | 19-03-2003 |
| | | | JP | 2003163975 A | 06-06-2003 |
| | | | US | 2003087641 A1 | 08-05-2003 |
| US 6111857 | A | 29-08-2000 | US | 5710758 A | 20-01-1998 |

EPO FORM P0460

Pour tout renseignement concernant cette annexe : voir Journal Officiel de l'Office européen des brevets, No.12/82